# EUROPEAN PATENT APPLICATION

(11) **EP 4 439 434 A1**
(43) Date of publication of application: **02.10.2024**
(21) Application number: 23165876.6
(22) Date of filing: 31.03.2023
(51) Int. Cl.: G06Q 30/0203, G06F 11/34, G06F 8/38

(54) **METHOD AND SYSTEM FOR GENERATION AND PRESENTATION OF USER EXPERIENCE RECOMMENDATIONS**

(30) Priority: 30.03.2023 IN 202341024085
(71) Applicant: Infosys Limited, 560-100 Bangalore (IN)
(72) Inventor: ASADULLAH, Allahbaksh Mohammedali, 560100 Bangalore (IN); ISLAM, Monirul, 560100 Bangalore (IN); MITTAL, Manisha, 560100 Bangalore (IN); SAMVEDI, Vijyeta, 560100 Bangalore (IN); MEHBOOB, Zeeshan, 560100 Bangalore (IN); DAS, Jishu, 560100 Bangalore (IN); CHAMPALAL, Hitesh, 560100 Bangalore (IN); PANDE, Anant, 560100 Bangalore (IN); MODAK, Trijeet Kr, 560100 Bangalore (IN)
(74) Representative: Finnegan Europe LLP

(57) **Abstract**

This disclosure relates to method and system for generation and presentation of User Experience (UX) recommendations. The method includes retrieving data corresponding to one or more users of an application from a database. The data includes one or more of user device screen recording data, application usage data, or user feedback data. The method further includes determining a set of UX parameter values and a set of UX recommendations based on the data using a first Artificial Intelligence (AI) model; generating a set of User Interface (UI) screen templates based on one or more of the set of UX parameter values, the set of UX recommendations, and the data, using a second AI model; and displaying a report through a Graphical User Interface (GUI) on a display of an administrator device.

## Description

This application claims priority to Indian Patent Application No. 202341024085, filed on March 30, 2023, which is hereby incorporated by reference in its entirety.

### FIELD

This disclosure relates generally to User Experience (UX) testing, and more particularly to a method and a system for generation and presentation of UX recommendations.

### BACKGROUND

The domain of User Experience (UX) of web applications and software-based products has been evolving rapidly over the last few decades. Innovations in computing devices prompt for a need of a change in the UX of applications for users. Poor UX may lead to bad reviews and loss of customers. Therefore, to keep up with the latest software and hardware innovations, technology-based companies are faced with a challenge of continuous improvements and enhancements of UX of their products and services.

The UX of an application running on a user device (such as smart phones, smart watches, tablets, laptops, computers, etc.), may be significantly affected by parameters, such as performance, power or energy consumption, User Interface (UI), and the like. In the current age of data collection and analysis, metrics corresponding to such parameters can be easily obtained from user devices. Such metrics are presently used to improve the UX of the applications. However, conventional techniques are lacking in generation of advanced UI screen templates and UX recommendations.

There is, therefore, a need in the present state of art, for techniques to address the problem of intelligently generating UX recommendations and UI screen templates.

### SUMMARY

In one embodiment, a method for generation and presentation of User Experience (UX) recommendations is disclosed. In one example, the method may include retrieving data corresponding to one or more users of an application from a database. The data may include one or more of user device screen recording data, application usage data, or user feedback data. Further, the method may include determining a set of UX parameter values and a set of UX recommendations based on the data using a first Artificial Intelligence (AI) model. Further, the method may include generating a set of User Interface (UI) screen templates based on one or more of the set of UX parameter values, the set of UX recommendations, and the data, using a second AI model. Further, the method may include displaying a report through a Graphical User Interface (GUI) on a display of an administrator device. The report may include one or more of the set of UX parameter values, the set of UX recommendations, and the set of UI screen templates.

In one embodiment, a system for generation and presentation of User Experience (UX) recommendations is disclosed. In one example, the system may include a processor and a computer-readable medium communicatively coupled to the processor. The computer-readable medium may store processor-executable instructions, which, on execution, may cause the processor to retrieve data corresponding to one or more users of an application from a database. The data may include one or more of user device screen recording data, application usage data, or user feedback data. The processor-executable instructions, on execution, may further cause the processor to determine a set of UX parameter values and a set of UX recommendations based on the data using a first Artificial Intelligence (AI) model. The processor-executable instructions, on execution, may further cause the processor to generate a set of User Interface (UI) screen templates based on one or more of the set of UX parameter values, the set of UX recommendations, and the data, using a second AI model. The processor-executable instructions, on execution, may further cause the processor to display a report through a Graphical User Interface (GUI) on a display of an administrator device. The report may include one or more of the set of UX parameter values, the set of UX recommendations, and the set of UI screen templates.

In one embodiment, a non-transitory computer-readable medium storing computer-executable instructions for generation and presentation of User Experience (UX) recommendations is disclosed. In one example, the stored instructions, when executed by a processor, cause the processor to perform operations including retrieving data corresponding to one or more users of an application from a database. The data may include one or more of user device screen recording data, application usage data, or user feedback data. The operations may further include determining a set of UX parameter values and a set of UX recommendations based on the data using a first Artificial Intelligence (AI) model. The operations may further include generating a set of User Interface (UI) screen templates based on one or more of the set of UX parameter values, the set of UX recommendations, and the data, using a second AI model. The operations may further include displaying a report through a Graphical User Interface (GUI) on a display of an administrator device. The report may include one or more of the set of UX parameter values, the set of UX recommendations, and the set of UI screen templates.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, explain the disclosed principles.
**FIG. 1** is a block diagram of an environment for generation and presentation of User Experience (UX) recommendations, in accordance with an exemplary embodiment of the present disclosure;
**FIG. 2** is a block diagram of a server for generation and presentation of UX recommendations, in accordance with an exemplary embodiment of the present disclosure;
**FIG. 3** is a flow diagram of an exemplary process for generation and presentation of UX recommendations, in accordance with an exemplary embodiment of the present disclosure;
**FIG. 4** is a flow diagram of a detailed exemplary control logic for generation and presentation of UX recommendations, in accordance with an exemplary embodiment of the present disclosure; and
**FIG. 5** is a block diagram that illustrates a system architecture of a computer system for generation and presentation of UX recommendations, in accordance with an exemplary embodiment of the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

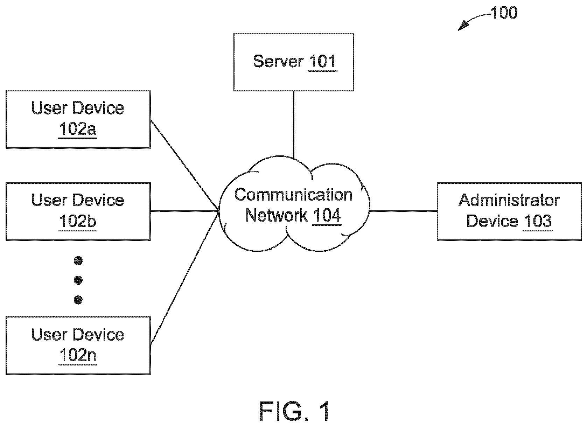

**FIG. 1** is a diagram that illustrates an environment 100 for generation and presentation of User Experience (UX) recommendations, in accordance with an exemplary embodiment of the present disclosure.

The environment 100 may include a server 101, one or more user devices (e.g., a first user device 102a, a second user device 102b, ..., an n^{th} user device 102n) associated with one or more users, and an administrator device 103 associated with an administrator. An application (e.g., a web application or a software application) may be rendered on the one or more user devices. The server 101, the one or more user devices, and the administrator device 103 are configured to communicate with each other via a communication network 104. Examples of the communication network 104 may include, but are not limited to, a wireless fidelity (Wi-Fi) network, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, and a combination thereof.

The communication network 104 may facilitate exchange of data corresponding to the application between the one or more user devices and the server 101. The data may include, but is not limited to, user device screen recording data, application usage data, user feedback data, and the like. Further, the communication network 104 may also facilitate exchange of data corresponding to the application between the server 101 and the administrator device 103. The data may include, but is not limited to, a set of UX parameter values, a set of UX recommendations, a set of UI screen templates, and the like.

The application may be a web application or a software application (for example, a word processing application, an e-commerce application, a ticket booking application, etc.). The application may be managed by the administrator (i.e., an enterprise or an individual owner) through the administrator device 103. The administrator device 103 may be a computing device capable of exchanging information over a communication network (such as the communication network 104). The administrator device 103 may be communicatively coupled (through a wired or a wireless connection) with the server 101 through the communication network 104. By way of an example, the administrator device 103 may be a smartphone, a tablet, a laptop, a desktop, or the like.

A user may be a tester or an end-user of the application. In an embodiment, a user profile of the user may be created. The user profile may include demographic data of the user. The one or more users of the application may be grouped based on the corresponding demographic data. In a preferred embodiment, the one or more groups of users may be created, each group including more than one user (e.g., tens, hundreds, or thousands).

The user may operate a user device (such as the first user device 102a). In some embodiments, the user may operate more than one user devices. The user device may be a computing device capable of exchanging information over a communication network (such as the communication network 104). The user device may be communicatively coupled (through a wired or a wireless connection) with the server 101 through the communication network 104. By way of an example, the user device may be a smartphone, a tablet, a laptop, a desktop, a smartwatch (or any other smart wearable devices, such as smartglasses), a Virtual Reality (VR) headset, or the like. The application may be rendered on a GUI of a display of the user device.

It may be noted that the UX of the application may correspond to an overall experience of the user while using the application. The UX may include ease of use of the application, perception of the application, and efficiency. While using the application, the user may have a positive experience or a negative experience. Therefore, user feedback is important to understand how the application is experienced by the end-user and whether there are ways to improve the UX of the application.

Various UX parameters are considered for UX analysis. The UX parameters may include quantitative UX parameters and qualitative UX parameters. Some examples of the UX parameters may be user engagement, usability of the application, application adoption metrics, user retention metrics, User Interface (UI) design, etc. The quantitative UX parameters can be used to produce analytics reports. However, drawing insights from the analytics requires a lot of thorough analysis and time. In many cases, the administrator may not have adequate resources or time to find ways to improve the UX of the application.

The application may be operated through the server 101. The server 101 may be a centralized server or a group of decentralized servers. In some embodiments, the server 101 may provide one or more guidelines to the user to perform specific tasks while using the application. The server 101 may then record interaction of the user with the application (i.e., a user session) in real-time or near real-time to obtain various data, such as, but not limited to, user device screen recording data, application usage data, user feedback data, user profile, or the like. These data may help in determining usability of the application and identifying bottlenecks in the UX.

As used herein, the term "real-time" may refer to capturing events within seconds, minutes, or hours, by the way of definition of the application, or the like. For example, for a certain type of application, the term "real time" may refer to transmitting information from data sources within a few minutes or hours. For another application, the term "real time" may refer to propagating information from the sources substantially immediately, i.e., within a few seconds. Likewise, as used herein, the term "near-real-time" may refer to capturing events within time intervals ranging from one-hundredth of the rate of "real-time" capturing to one hundred times the rate of "real-time" capturing as described above.

Further, the server 101 may determine a set of UX parameter values (e.g., performance metrics, user persona information, UX score information, and the like) and a set of UX recommendations based on the data using a first Artificial Intelligence (AI) model. The first AI model may be an analytical AI model (for example, Neural Network (NN), Long Short Term Memory (LSTM), etc.) a generative AI model (for example, GPT-4, LaMDA, etc.). The set of UX recommendations may include actionable insights (for example, difficulty in identifying buttons causing new users to spend more time in a particular page, confusing forms causing users to not complete submission of forms, etc.) based on the data. The actionable insights may then be provided to the administrator, who can then implement these changes and validate the results.

Further, the server 101 may generate a set of UI screen templates based on one or more of the set of UX parameter values, the set of UX recommendations, and the data, using a second AI model. The second AI model may be a generative AI model (for example, GPT-4, LaMDA, Dall-E, etc.). The set of UI screen templates may include one or more of image data, text data, or video data. UI screen templates may be generated in form of a code of a UI screen, standard wireframes compatible with wireframe tools (such as figma, etc.), image files of UI screen screenshots, or the like.

Further, the server 101 may display a report through a Graphical User Interface (GUI) on a display of the administrator device 103. The report may include one or more of the set of UX parameter values, the set of UX recommendations, and the set of UI screen templates. In an embodiment, if the report determines the UX as average or below average (where average may be a predefined threshold score of UX), the server 101 may render a preview screen of an improved UX to the user on a temporarily hosted path. The user can then perform similar or same task on the preview screen and the server 101 may calculate new metrics corresponding to the user interaction with the preview screen. In another embodiment, the administrator may be prompted to take an action corresponding to an identified issue in the UX in case of average or below average UX. The prompt may include an urgency label to indicate a magnitude of the issue.

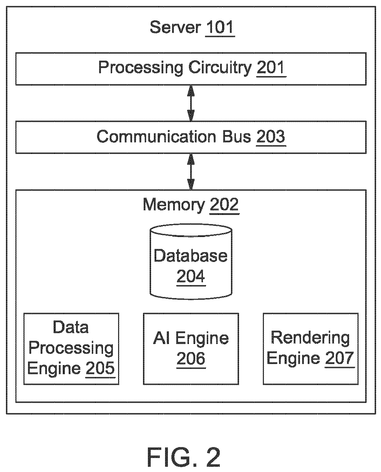

**FIG. 2** is a block diagram that illustrates the server 101 for generation and presentation of UX recommendations, in accordance with an exemplary embodiment of the present disclosure. FIG. 2 is explained in conjunction with elements from FIG. 1. The server 101 may include a processing circuitry 201 and a memory 202 communicatively coupled to the processing circuitry 201 via a communication bus 203. The memory 202 may store processor instructions. The processor instructions, when executed by the processing circuitry 201, may cause the processing circuitry 201 to implement one or more embodiments of the present disclosure such as, but not limited to, generation and presentation of UX recommendations, UX parameter values, and UI screen templates. The memory 202 may include a database 204, a data processing engine 205, an AI engine 206, and a rendering engine 207.

The data processing engine 205 may retrieve data corresponding to one or more users of an application from the database 204. In an embodiment, the data may be obtained from one or more user devices (for example, the user device 102a, the user device 102b, ..., the user device 102n) associated with the one or more users. The data may include one or more of user device screen recording data, application usage data, or user feedback data.

For ease of explanation, the embodiments detailing the working of the server 101 for generation and presentation of UX recommendations have been described with an example of a single user device. However, the present disclosure is not limited to receiving and processing data received from a single user device. The server 101 may perform similar functions with one or more user devices. It should be noted that, wherever applicable, embodiments with more than one user devices have been described following the detailed description of a single user device.

The user device screen recording data may be obtained from screen recording of a user device when the user is using the application. The user device screen recording data may be captured during a user session with the application. Further, the user device screen recording data may be captured and further processed in real-time or near real-time. Alternately, the user device screen recording data may be stored in the database 204 and retrieved at a later time instance. Screen of the user device may be recorded for entirety of the user session with the application. Alternately, the screen of the user device may be recorded for a part of the user session with the application (for example, for a fixed time duration, or for specific tasks performed by the user on the application). User interactions, such as, but not limited to, hover, mouse click, data entry, page navigation, and the like, may be identified using deep learning models. It may be noted that while identifying data entry, private data of the user (e.g., address, credit card or debit card information, banking details, passwords, etc.) may be masked or obfuscated prior to feeding such data to the deep learning models.

The application usage data (e.g., application telemetry data) may be obtained from the user device. The application usage data may be captured during user interaction with the application. Further, the application usage data may be captured and further processed in real-time or near real-time. Alternately, the application usage data may be stored in the database 204 and retrieved at a later time instance. The application usage data may be collected for entirety of user session with the application. Alternately, the application usage data may be collected for a part of the user session with the application (for example, for a fixed time duration, or for specific tasks performed by the user on the application). In an embodiment, the application usage data may be obtained through a monitoring tool. By way of an example, the monitoring tool may be a telemetry collection tool (e.g., Google^{®} console tools) or Application Programming Interfaces (APIs) thereof, or any other application configured to generate, collect, and/or export telemetry data from the user device. The monitoring tool may be installed in the user device or may be remotely accessible via a server (same as or different from the server 101).

The user feedback data may be obtained in form of at least one of a video recording of the user using the application, an audio recording of the user using the application, and textual feedback (e.g., through forms or surveys) from the user. The video recording and the audio recording may be captured and further processed in real-time or near real-time. Video and/or audio of the user using the application may be recorded and stored in the database 204. It should be noted that the video and/or audio recordings may only be captured upon receiving consent of the user in accordance with various regional privacy and security norms. In some additional embodiments, the user may be asked to fill a survey regarding the UX of the application to obtain textual feedback of the user.

Further, the data processing engine 205 may pre-process the retrieved data. In embodiments where the data is received in real-time, the data processing engine 205 may pre-process the received data in near real-time. Further, the data processing engine 205 may store the pre-processed data in the database. Alternately, the data processing engine 205 may send the pre-processed data to the AI engine 206.

The AI engine 206 may include a first AI model and a second AI model. The first AI model may be an analytical AI model or a generative AI model. The second AI model may be a generative AI model.

The AI engine 206 may receive the pre-processed data from the database 204 (if stored in the database 204 by the data processing engine 205) or directly from the data processing engine 205 in near real-time. Further, the AI engine 206 may determine a set of UX parameter values and a set of UX recommendations based on the data using the first AI model. It may be noted that the set of UX parameter values may correspond to performance metrics, user persona information, and UX score information.

Based on the recorded video and/or audio in the database 204, the AI engine 206 may determine user reactions, emotions, satisfaction, etc. using the first AI model. In some embodiments, eye tracking of the user may be performed to determine user feedback while using the application. Further, textual feedback (i.e., the survey data) may be further used to co-relate and identify UX pain points (i.e., UX score) during user session.

In some embodiments, checks may be performed regularly to determine whether there is a model drift in the first AI model. The model drift may occur when current data is starkly different from the data with which the first AI model was most recently trained. In such cases, the first AI model may perform erroneous computations and consequently, may give erroneous output. In case a model drift is identified, the AI engine 206 may modify one or more parameters (e.g., weights) of the first AI model.

Further, the AI engine 206 may generate a set of UI screen templates based on one or more of the set of UX parameter values, the set of UX recommendations, and the data, using the second AI model. The set of UI screen templates may include one or more of image data, text data, or video data. In an embodiment, the set of UI screen templates may be in form of generated code corresponding to the UI screen of the application. The generated code may be a source code for the UI screen, a pseudo code, or a code corresponding to one or more GUI elements of the application. In another embodiment, the set of UI screen templates may be in form of standard wireframes of the UI screen. In yet another embodiment, the set of UI screen templates may be in form of UI screen images (i.e., screenshots) including re-arrangement of existing GUI elements of the application or new GUI elements added to the UI screen. A code corresponding to the UI screen image may then be generated manually or though the second AI model.

In some embodiments, checks may be performed regularly to determine whether there is a model drift in the second AI model. The model drift may occur when current data is starkly different from the data with which the second AI model was most recently trained. In such cases, the second AI model may generate erroneous output. In case a model drift is identified, the AI engine 206 may modify one or more parameters (e.g., weights) of the second AI model.

In an embodiment, the first AI model and the second AI model may be a single AI model capable of generating the set of UX parameter values, the set of UX recommendations, and the set of UI screen templates from the pre-processed data. In another embodiment, the first AI model and the second AI model may be a part of an ensemble model.

The rendering engine 207 may display a report through a GUI on a display of an administrator device (such as the administrator device 103). The report may include one or more of the set of UX parameter values, the set of UX recommendations, and the set of UI screen templates.

By way of an example, a first user and a second user may be given a set of tasks to be performed on the application. The first user and the second user belong to the same user group (i.e., a group of users formed on the basis of their demographic data). In other words, the first user and the second user have a similar demographic profile. It should be noted that the first user is using a first user device and the second user is using a second user device while performing the tasks on the application. While performing the tasks through their associated user devices, user device screen recording data, application usage data, and user feedback data (video and audio recordings of the users while using the application) may be obtained by the data processing engine 205. Further, upon performing the tasks, the first user and the second user are asked to fill a survey form to obtain their textual feedback. Further, the data processing engine 205 may consolidate the data obtained from the first user device and the data obtained from the second user device.

Further, the AI engine 206 may generate the set of UX parameter values and the set of UX recommendations based on the consolidated data using the first AI model. The AI engine 206 may then generate the set of UI screen templates based on the consolidated data, the set of UX parameter values, and the set of UX recommendations, using the second AI model. Finally, the rendering engine 207 may notify the administrator via the administrator device 103 in form of a report. The report may include the set of UX parameter values, the set of UX recommendations, and the set of UI screen templates.

It should be noted that engines 205 - 207 and the database 204 are represented as a part of the server 101 for ease of illustration only. Such engines 205 - 207 and the database 204 may function as a part of one or more servers as may be deemed fit for implementation of the disclosed embodiments. As will be appreciated by those skilled in the art, the server 101 may be a centralized server or may be a decentralized group of servers communicably coupled with each other. In embodiments where the server 101 is a decentralized group of servers, each server of the group may include one or more of the engines 205 - 207 or the database 204.

It should also be noted that the database 204 may be stored in the memory 202 of the server 101 or, in some embodiments, may be stored in a memory of an external computing device (e.g., desktop, laptop, a second server, etc.) or a data storage device (e.g., Hard Disk Drives (HDD), Solid State Drives (SSD), Pen Drives, etc.). Further, in some embodiments, the server 101 may include more than one database for storing different types of data. For example, the server 101 may store the data corresponding to the one or more users in a first database, the set of UX parameter values in a second database, the set of UX recommendations in a third database, and the set of UI screen templates in a fourth database. Thus, the server 101 may include one or more databases.

It should also be noted that all such aforementioned engines 205 - 207 may be represented as a single module or a combination of different engines. Further, as will be appreciated by those skilled in the art, each of the engines 205 - 207 may reside, in whole or in parts, on one device or multiple devices in communication with each other. In some embodiments, each of the engines 205 - 207 may be implemented as dedicated hardware circuit comprising custom application-specific integrated circuit (ASIC) or gate arrays, off-the-shelf semiconductors such as logic chips, transistors, or other discrete components. Each of the engines 205 - 207 may also be implemented in a programmable hardware device such as a field programmable gate array (FPGA), programmable array logic, programmable logic device, and so forth. Alternatively, each of the engines 205 - 207 may be implemented in software for execution by various types of processors (e.g., the processing circuitry 201). An identified engine of executable code may, for instance, include one or more physical or logical blocks of computer instructions, which may, for instance, be organized as an object, procedure, function, or other construct. Nevertheless, the executables of an identified engine or component need not be physically located together, but may include disparate instructions stored in different locations which, when joined logically together, include the engine and achieve the stated purpose of the engine. Indeed, an engine of executable code could be a single instruction, or many instructions, and may even be distributed over several different code segments, among different applications, and across several memory devices.

As will be appreciated by one skilled in the art, a variety of processes may be employed for generation and presentation of UX recommendations. For example, the exemplary server 101 may generate and present UX recommendations by the processes discussed herein. In particular, as will be appreciated by those of ordinary skill in the art, control logic and/or automated routines for performing the techniques and steps described herein may be implemented by the server 101 either by hardware, software, or combinations of hardware and software. For example, suitable code may be accessed and executed by the one or more processors on the server 101 to perform some or all of the techniques described herein. Similarly, application specific integrated circuits (ASICs) configured to perform some or all of the processes described herein may be included in the one or more processors on the server 101.

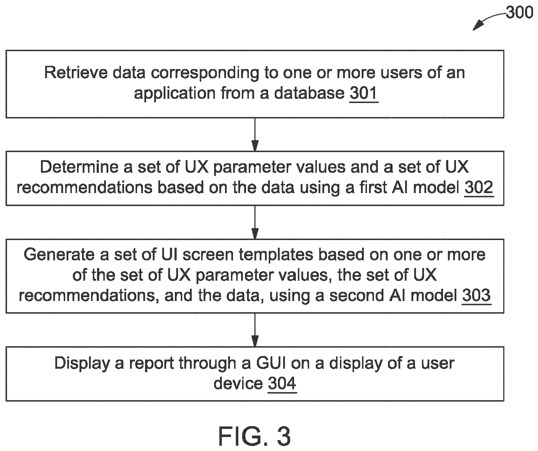

**FIG. 3** is a diagram that illustrates an exemplary process 300 for generation and presentation of UX recommendations, in accordance with an exemplary embodiment of the present disclosure. FIG. 3 is explained in conjunction with elements from FIGS. 1 and 2. In an embodiment, the process 300 may be implemented by the server 101. The process 300 may include retrieving, by the data processing engine 205, data corresponding to one or more users of an application from the database 204, at step 301. The data may include one or more of user device screen recording data, application usage data, or user feedback data.

The data may be obtained from one or more user devices (for example, the user device 102a, the user device 102b, ..., the user device 102n). In an embodiment, the process 300 may include obtaining, by the data processing engine 205, the user device screen recording data corresponding to a user using the application from an associated user device (such as the user device 102a). The associated user is one of the one or more users. The user device screen recording data may correspond to a screen recording of the user using the application. Further, the process 300 may include storing, by the data processing engine 205, the user device screen recording data in the database 204.

In an embodiment, the process 300 may include obtaining, by the data processing engine 205, the application usage data of a user from an associated user device. The user is one of the one or more users. Further, the process 300 may include storing, by the data processing engine 205, the application usage data in the database 204.

In some embodiments, the process 300 may include capturing, by the data processing engine 205, a video recording corresponding to a user using the application from an associated user device. The user is one of the one or more users. The process 300 may include capturing, by the data processing engine 205, an audio recording corresponding to the user using the application from the associated user device. The process 300 may include obtaining, by the data processing engine 205, textual feedback of the user from the associated user device.

In some embodiments, at least one of the video recording, the audio recording, or the textual feedback may be captured from the user device. In such embodiments, storing, by the data processing engine 205, at least one of the video recording, the audio recording, or the textual feedback as the user feedback data in the database 204.

In an embodiment, the process 300 may include pre-processing, by the data processing engine 205, the data retrieved from the database 204. In an embodiment, the process 300 may include pre-processing, by the data processing engine 205, the data obtained in real-time or near real-time.

Further, the process 300 may include determining, by the AI engine 206, a set of UX parameter values and a set of UX recommendations based on the data using a first AI model, at step 302. The set of UX parameter values may correspond to performance metrics, user persona information, and UX score information. A check may be performed to identify presence of a model drift in the first AI model. Upon identifying the model drift, the process 300 may include modifying, by the AI engine 206, one or more parameters of the first AI model based on the data stored in the database.

In some embodiments, the process 300 may include storing, by the data processing engine 205, the determined set of UX parameter values and the determined set of UX recommendations in the database 204. In such embodiments, the process 300 may include modifying, by the AI engine 206, one or more parameters of the first AI model based on the set of UX parameter values and the set of UX recommendations. This may be done to train the first AI model using historical output data of the first AI model. The historical output data may be used as a feedback to the first AI model for improving the determination.

Further, the process 300 may include generating, by the AI engine 206, a set of UI screen templates based on one or more of the set of UX parameter values, the set of UX recommendations, and the data, using a second AI model, at step 303. The set of UI screen templates may include one or more of image data, text data, or video data. A check may be performed to identify presence of a model drift in the second AI model. Upon identifying the model drift, the process 300 may include modifying, by the AI engine 206, one or more parameters of the second AI model based on the data stored in the database.

Further, the process 300 may include displaying, by the rendering engine 207, a report through a GUI on a display of an administrator device (such as the administrator device 103), at step 304. In an embodiment, the report may include one or more of the set of UX parameter values, the set of UX recommendations, and the set of UI screen templates.

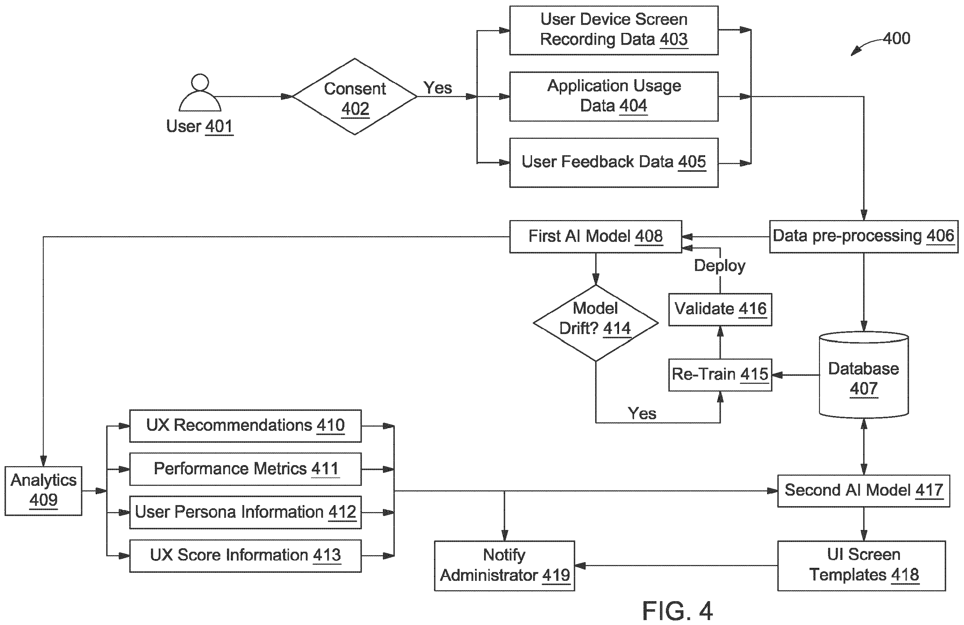

**FIG. 4** is a flow diagram that illustrates a detailed exemplary control logic 400 for generation and presentation of User Experience (UX) recommendations, in accordance with an exemplary embodiment of the present disclosure. FIG. 4 is explained in conjunction with elements from FIGS. 1, 2, and 3. In an embodiment, the control logic 400 may be implemented by the server 101. A user 401 may use the application from a user device (such as the user device 102a). Further, a check may be performed at step 402 of the control logic 400 to determine whether the user 401 has provided a consent for data access. If the user 401 has provided the consent, the control logic may include receiving the data from the ser device 102a. The data may include one or more of user device screen recording data 403, application usage data 404, or user feedback data 405. Further, the control logic 400 may include pre-processing the data, at step 406. The pre-processed data may then be stored in a database 407 (same as the database 204).

Further, the control logic 400 may include performing, a first AI model 408, analytics based on the pre-processed data to generate first output data, at step 409. The first output data may include UX recommendations 410, performance metrics 411, user persona information 412, and UX score information 413.

The analytics may be performed for each of one or more tasks given to the user. The analytics may be based on the following exemplary parameters of an application screen:
a. Tracking readability of the application screen (fonts, location of the widgets, etc.).
b. Tracking colour combinations used in the application screen.
c. Tracking mouse movement and time taken for the movement, and how fast and accurately the task was performed.
d. Tracking the page performance metrics, such as page load speed, console log and check.
e. For mobile/tablet/TV, tracking the data on pressure, size of the screen, etc.

At step 414 of the control logic 400, a check may be performed to determine a model drift in the first AI model. If a model drift is determined, the control logic 400 may include re-training the first AI model 408, at step 415. In some embodiments, the re-training may include modifying one or more parameters (e.g., weights) of the first AI model 408 based on the data stored in the database 407. Further, the control logic 400 may include validating the re-trained first AI model 408, at step 416. Upon successful validation, the re-trained first AI model 408 may be deployed for performing the analytics.

Further, a second AI model 417 may use the first output data as an input to generate second output data. The second output data may include UI screen templates 418. The UI screen templates 418 may be in a form of generated code, UI screen images, or standard wireframes.

Further, the control logic 400 may include notifying the administrator through a report, at step 419. The report may include the first output data and the second output data.

As will be also appreciated, the above described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

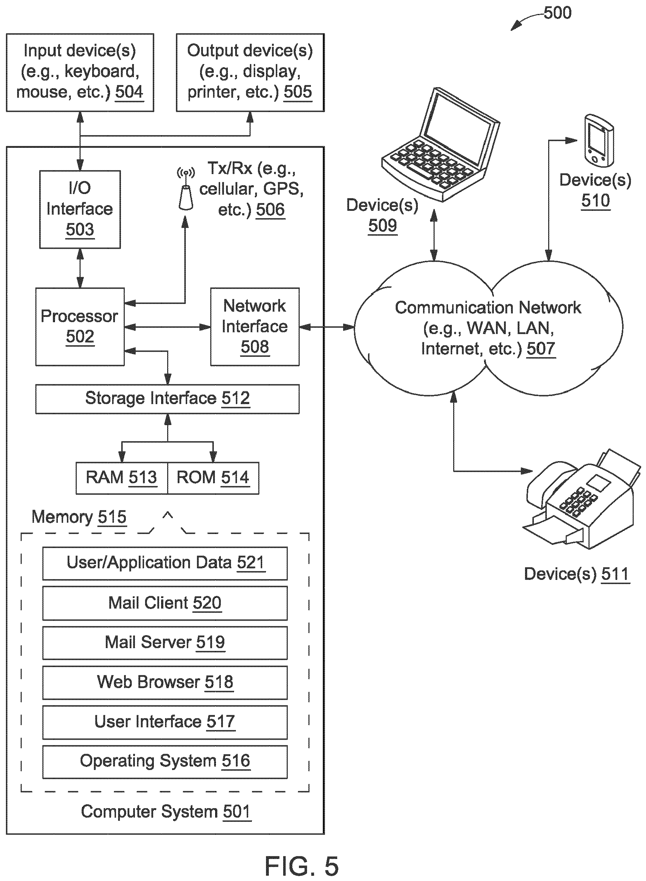

The disclosed methods and systems may be implemented on a conventional or a general-purpose computer system, such as a personal computer (PC) or server computer. **FIG. 5** is a block diagram that illustrates a system architecture 500 of a computer system 501 for generation and presentation of User Experience (UX) recommendations, in accordance with an exemplary embodiment of the present disclosure. Variations of computer system 501 may be used for implementing server 101 for generation and presentation of UX recommendations. Computer system 501 may include a central processing unit ("CPU" or "processor") 502. Processor 502 may include at least one data processor for executing program components for executing user-generated or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD^{®} ATHLON^{®}, DURON^{®} OR OPTERON^{®}, ARM's application, embedded or secure processors, IBM^{®} POWERPC^{®}, INTEL^{®} CORE^{®} processor, ITANIUM^{®} processor, XEON^{®} processor, CELERON^{®} processor or other line of processors, etc. The processor 502 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 502 may be disposed in communication with one or more input/output (I/O) devices via I/O interface 503. The I/O interface 503 may employ communication protocols/methods such as, without limitation, audio, analog, digital, monoaural, RCA, stereo, IEEE-1394, near field communication (NFC), FireWire, Camera Link^{®}, GigE, serial bus, universal serial bus (USB), infrared, PS/2, BNC, coaxial, component, composite, digital visual interface (DVI), high-definition multimedia interface (HDMI), radio frequency (RF) antennas, S-Video, video graphics array (VGA), IEEE 802.n /b/g/n/x, Bluetooth, cellular (e.g., code-division multiple access (CDMA), high-speed packet access (HSPA+), global system for mobile communications (GSM), long-term evolution (LTE), WiMAX, or the like), etc.

Using the I/O interface 503, the computer system 501 may communicate with one or more I/O devices. For example, the input device 504 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, altimeter, gyroscope, proximity sensor, or the like), stylus, scanner, storage device, transceiver, video device/source, visors, etc. Output device 505 may be a printer, fax machine, video display (e.g., cathode ray tube (CRT), liquid crystal display (LCD), light-emitting diode (LED), plasma, or the like), audio speaker, etc. In some embodiments, a transceiver 506 may be disposed in connection with the processor 502. The transceiver 506 may facilitate various types of wireless transmission or reception. For example, the transceiver 506 may include an antenna operatively connected to a transceiver chip (e.g., TEXAS INSTRUMENTS^{®} WILINK WL1286^{®}, BROADCOM^{®} BCM4550IUB8^{®}, INFINEON TECHNOLOGIES^{®} X-GOLD 1436-PMB9800^{®} transceiver, or the like), providing IEEE 802.1 1a/b/g/n, Bluetooth, FM, global positioning system (GPS), 2G/3G HSDPA/HSUPA communications, etc.

In some embodiments, the processor 502 may be disposed in communication with a communication network 507 via a network interface 508. The network interface 508 may communicate with the communication network 507. The network interface 508 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 507 may include, without limitation, a direct interconnection, local area network (LAN), wide area network (WAN), wireless network (e.g., using Wireless Application Protocol), the Internet, etc. Using the network interface 508 and the communication network 507, the computer system 501 may communicate with devices 505, 509, 510, and 511. These devices may include, without limitation, personal computer(s), server(s), fax machines, printers, scanners, various mobile devices such as cellular telephones, smartphones (e.g., APPLE^{®} IPHONE^{®}, BLACKBERRY^{®} smartphone, ANDROID^{®} based phones, etc.), tablet computers, eBook readers (AMAZON^{®} KINDLE^{®}, NOOK^{®} etc.), laptop computers, notebooks, gaming consoles (MICROSOFT^{®} XBOX^{®}, NINTENDO^{®} DS^{®}, SONY^{®} PLAYSTATION^{®}, etc.), or the like. In some embodiments, the computer system 501 may itself embody one or more of these devices.

In some embodiments, the processor 502 may be disposed in communication with one or more memory devices 515 (e.g., RAM 513, ROM 514, etc.) via a storage interface 512. The storage interface 512 may connect to memory devices 515 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), STD Bus, RS-232, RS-422, RS-485, I2C, SPI, Microwire, 1-Wire, IEEE 1284, Intel^{®} QuickPathInterconnect, InfiniBand, PCIe, etc. The memory drives may further include a drum, magnetic disc drive, magneto-optical drive, optical drive, redundant array of independent discs (RAID), solid-state memory devices, solid-state drives, etc.

The memory devices 515 may store a collection of program or database components, including, without limitation, an operating system 516, user interface 517, web browser 518, mail server 519, mail client 520, user/application data 521 (e.g., any data variables or data records discussed in this disclosure), etc. The operating system 516 may facilitate resource management and operation of the computer system 501. Examples of operating systems include, without limitation, APPLE^{®} MACINTOSH^{®} OS X, UNIX, Unix-like system distributions (e.g., Berkeley Software Distribution (BSD), FreeBSD, NetBSD, OpenBSD, etc.), Linux distributions (e.g., RED HAT^{®}, UBUNTU^{®}, KUBUNTU^{®}, etc.), IBM^{®} OS/2, MICROSOFT^{®} WINDOWS^{®} (XP^{®}, Vista^{®}/7/8/10/11, etc.), APPLE^{®} IOS^{®}, GOOGLE^{®} ANDROID^{®}, BLACKBERRY^{®} OS, or the like. User interface 517 may facilitate display, execution, interaction, manipulation, or operation of program components through textual or graphical facilities. For example, user interfaces may provide computer interaction interface elements on a display system operatively connected to the computer system 501, such as cursors, icons, check boxes, menus, scrollers, windows, widgets, etc. Graphical user interfaces (GUIs) may be employed, including, without limitation, APPLE^{®} MACINTOSH^{®} operating systems' AQUA^{®} platform, IBM^{®} OS/2^{®}, MICROSOFT^{®} WINDOWS^{®} (e.g., AERO^{®}, METRO^{®}, etc.), UNIX X-WINDOWS, web interface libraries (e.g., ACTIVEX^{®}, JAVA^{®}, JAVASCRIPT^{®}, AJAX^{®}, HTML, ADOBE^{®} FLASH^{®}, etc.), or the like.

In some embodiments, the computer system 501 may implement a web browser 518 stored program component. The web browser 518 may be a hypertext viewing application, such as MICROSOFT^{®} INTERNET EXPLORER^{®}, GOOGLE^{®} CHROME^{®}, MOZILLA^{®} FIREFOX^{®}, APPLE^{®} SAFARI^{®}, etc. Secure web browsing may be provided using HTTPS (secure hypertext transport protocol), secure sockets layer (SSL), Transport Layer Security (TLS), etc. Web browsers may utilize facilities such as AJAX^{®}, DHTML, ADOBE^{®} FLASH^{®}, JAVASCRIPT^{®}, JAVA^{®}, application programming interfaces (APIs), etc. In some embodiments, the computer system 501 may implement a mail server 519 stored program component. The mail server 519 may be an Internet mail server such as MICROSOFT^{®} EXCHANGE^{®}, or the like. The mail server 519 may utilize facilities such as ASP, ActiveX, ANSI C++/C#, MICROSOFT .NET^{®} CGI scripts, JAVA^{®}, JAVASCRIPT^{®}, PERL^{®}, PHP^{®}, PYTHON^{®}, WebObjects, etc. The mail server 519 may utilize communication protocols such as internet message access protocol (IMAP), messaging application programming interface (MAPI), MICROSOFT^{®} EXCHANGE^{®}, post office protocol (POP), simple mail transfer protocol (SMTP), or the like. In some embodiments, the computer system 501 may implement a mail client 520 stored program component. The mail client 520 may be a mail viewing application, such as APPLE MAIL^{®}, MICROSOFT ENTOURAGE^{®}, MICROSOFT OUTLOOK^{®}, MOZILLA THUNDERBIRD^{®}, etc.

In some embodiments, computer system 501 may store user/application data 521, such as the data, variables, records, etc. (e.g., the set of predictive models, the plurality of clusters, set of parameters (batch size, number of epochs, learning rate, momentum, etc.), accuracy scores, competitiveness scores, ranks, associated categories, rewards, threshold scores, threshold time, and so forth) as described in this disclosure. Such databases may be implemented as fault-tolerant, relational, scalable, secure databases such as ORACLE^{®} OR SYBASE^{®} OR POSTGRESQL^{®} OR any such similar data. Alternatively, such databases may be implemented using standardized data structures, such as an array, hash, linked list, struct, structured text file (e.g., XML), table, or as object-oriented databases (e.g., using OBJECTSTORE^{®}, POET^{®}, ZOPE^{®}, etc.). Such databases may be consolidated or distributed, sometimes among the various computer systems discussed above in this disclosure. It is to be understood that the structure and operation of the any computer or database component may be combined, consolidated, or distributed in any working combination.

Thus, the disclosed method and system try to overcome the technical problem of generation and presentation of User Experience (UX) recommendations. Classical or traditional approaches for generating UX recommendations and UI screens fail to intelligently analyze UX pain points using a holistic set of user data. The disclosed method and system retrieve data corresponding to one or more users of an application from a database. The data may include one or more of user device screen recording data, application usage data, or user feedback data. Further, the method and system determine a set of UX parameter values and a set of UX recommendations based on the data using a first Artificial Intelligence (AI) model. Further, the method and system generate a set of User Interface (UI) screen templates based on one or more of the set of UX parameter values, the set of UX recommendations, and the data, using a second AI model. Further, the method and system display a report through a Graphical User Interface (GUI) on a display of an administrator device. The report may include one or more of the set of UX parameter values, the set of UX recommendations, and the set of UI screen templates.

As will be appreciated by those skilled in the art, the techniques described in the various embodiments discussed above are not routine, or conventional, or well understood in the art. The techniques discussed above provide for generation and presentation of User Experience (UX) recommendations. If the UX is average or not good (based on different parameters listed in the present disclosure), the application (screen) provides the user a preview of an improved experience on a temporary hosted path based on an Artificial Intelligence (AI) model. The user can then perform similar or same task on the preview and the server may calculate the metrics.

In light of the above mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

The specification has described method and system for generation and presentation of User Experience (UX) recommendations. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

## Claims

1. A method for generation and presentation of User Experience (UX) recommendations, comprising:
retrieving, by a server, data corresponding to one or more users of an application from a database, wherein the data comprises one or more of user device screen recording data, application usage data, or user feedback data;
determining, by the server, a set of UX parameter values and a set of UX recommendations based on the data using a first Artificial Intelligence (AI) model;
generating, by the server, a set of User Interface (UI) screen templates based on one or more of the set of UX parameter values, the set of UX recommendations, and the data, using a second AI model; and
displaying, by the server, a report through a Graphical User Interface (GUI) on a display of an administrator device, wherein the report comprises one or more of the set of UX parameter values, the set of UX recommendations, and the set of UI screen templates.

2. The method of claim 1, further comprising:
obtaining, by the server, the user device screen recording data corresponding to a user using the application from an associated user device, wherein the associated user is one of the one or more users; and
storing, by the server, the user device screen recording data in the database.

3. The method of claim 1, further comprising:
obtaining, by the server, the application usage data of a user from an associated user device, wherein the user is one of the one or more users; and
storing, by the server, the application usage data in the database.

4. The method of claim 1, further comprising:
at least one of,
capturing, by the server, a video recording corresponding to a user using the application from an associated user device, wherein the user is one of the one or more users;
capturing, by the server, an audio recording corresponding to the user using the application from the associated user device; or
obtaining, by the server, a textual feedback of the user from the associated user device; and
storing, by the server, at least one of the video recording, the audio recording, or the textual feedback as the user feedback data in the database.

5. The method of claim 1, further comprising pre-processing, by the server, the data retrieved from the database.

6. The method of claim 1, further comprising, at least one of:
modifying, by the server, one or more parameters of the first AI model based on the data stored in the database; or
modifying, by the server, one or more parameters of the second AI model based on the data stored in the database.

7. The method of claim 1, further comprising:
storing, by the server, the determined set of UX parameter values and the determined set of UX recommendations in the database; and
modifying, by the server, one or more parameters of the first AI model based on the set of UX parameter values and the set of UX recommendations.

8. The method of claim 1, wherein the set of UX parameter values corresponds to performance metrics, user persona information, and UX score information.

9. The method of claim 1, wherein the set of UI screen templates comprises one or more of an image data, a text data, or a video data.

10. A system for generation and presentation of User Experience (UX) recommendations, comprising:
a processing circuitry; and
a memory communicatively coupled to the processing circuitry, wherein the memory stores processor instructions, which when executed by the processing circuitry, cause the processing circuitry to:
retrieve data corresponding to one or more users of an application from a database, wherein the data comprises one or more of user device screen recording data, application usage data, or user feedback data;
determine a set of UX parameter values and a set of UX recommendations based on the data using a first Artificial Intelligence (AI) model;
generate a set of User Interface (UI) screen templates based on one or more of the set of UX parameter values, the set of UX recommendations, and the data, using a second AI model; and
display a report through a Graphical User Interface (GUI) on a display of an administrator device, wherein the report comprises one or more of the set of UX parameter values, the set of UX recommendations, and the set of UI screen templates.

11. The system of claim 10, wherein the processor instructions, on execution, further cause the processing circuitry to:
obtain the user device screen recording data corresponding to a user using the application from an associated user device, wherein the associated user is one of the one or more users; and
store the user device screen recording data in the database.

12. The system of claim 10, wherein the processor instructions, on execution, further cause the processing circuitry to:
obtain the application usage data of a user from an associated user device, wherein the user is one of the one or more users; and
store the application usage data in the database.

13. The system of claim 10, wherein the processor instructions, on execution, further cause the processing circuitry to:
at least one of,
capture a video recording corresponding to a user using the application from an associated user device, wherein the user is one of the one or more users;
capture an audio recording corresponding to the user using the application from the associated user device; or
obtain a textual feedback of the user from the associated user device; and
store at least one of the video recording, the audio recording, or the textual feedback as the user feedback data in the database.

14. The system of claim 10, wherein the processor instructions, on execution, further cause the processing circuitry to pre-process the data retrieved from the database.

15. The system of claim 10, wherein the processor instructions, on execution, further cause the processing circuitry to, at least one of:
modify one or more parameters of the first AI model based on the data stored in the database; or
modify one or more parameters of the second AI model based on the data stored in the database.

16. The system of claim 10, wherein the processor instructions, on execution, further cause the processing circuitry to:
store the determined set of UX parameter values and the determined set of UX recommendations in the database; and
modify one or more parameters of the first AI model based on the set of UX parameter values and the set of UX recommendations.

17. The system of claim 10, wherein the set of UX parameter values corresponds to performance metrics, user persona information, and UX score information.

18. The system of claim 10, wherein the set of UI screen templates comprises one or more of an image data, a text data, or a video data.

19. A non-transitory computer-readable medium storing computer-executable instructions for generation and presentation of User Experience (UX) recommendations, the computer-executable instructions configured for:
retrieving data corresponding to one or more users of an application from a database, wherein the data comprises one or more of user device screen recording data, application usage data, or user feedback data;
determining a set of UX parameter values and a set of UX recommendations based on the data using a first Artificial Intelligence (AI) model;
generating a set of User Interface (UI) screen templates based on one or more of the set of UX parameter values, the set of UX recommendations, and the data, using a second AI model; and
displaying a report through a Graphical User Interface (GUI) on a display of an administrator device, wherein the report comprises one or more of the set of UX parameter values, the set of UX recommendations, and the set of UI screen templates.

20. The non-transitory computer-readable medium of claim 19, wherein the computer-executable instructions are further configured for, at least one of:
modifying, by the server, one or more parameters of the first AI model based on the data stored in the database; or
modifying, by the server, one or more parameters of the second AI model based on the data stored in the database.
